# EUROPÄISCHE PATENTANMELDUNG

(11) **EP 1 162 410 A1**
(43) Veröffentlichungstag der Anmeldung: **12.12.2001**
(21) Anmeldenummer: 01810524.7
(22) Anmeldetag: 30.05.2001
(51) Int. Cl.: F24D 3/16

(54) **Joch, Schienenanordnung sowie Deckenelement für eine Heiz- und Kühldecke**

(30) Priorität: 05.06.2000 CH 11072000
(71) Anmelder: BARCOL-AIR AG, 8712 Stäfa (CH)
(72) Erfinder: Sokolean, Helmuth, 8712 Uerikon (CH); Schönbächler, Beat, 8841 Gross (CH)
(74) Vertreter: Wagner, Wolfgang, Dr. Phil., Dipl.-Phys.

(57) **Zusammenfassung**

Eine Deckenplatte (6) ist an zwei Jochen (7a,b) mittels über Kugelgelenke (14) befestigter Koppelmagnete (12a-c, 12d-f) derart aufgehängt, dass sie gegen Kontaktflächen (3) an den Unterseiten von Grundplatten (2) die Joche (7a,b) kreuzender Schienen (1a-d) gezogen werden. Diese weisen jeweils an der Oberseite eine Führung (4) mit einem von Heiz- oder Kühlmittel durchflossenen Rohrabschnitt auf, die durch Ausnehmungen (10) in den Schenkeln (9) der als U-Profile ausgebildeten Joche (7a,b) geführt ist. Die Lage der Schienen (1a-d) wird durch Anschläge (11), die von an die Ausnehmungen (10) anschliessenden Teilen der Schenkel (9) gebildet werden und an welchen jeweils die Oberseite der Grundplatte (2) anliegt, derart bestimmt, dass die Kontaktflächen (3) in einer Ebene liegen.

## Beschreibung

### Technisches Gebiet

Die Erfindung betrifft eine Schienenanordnung für eine Heiz-und Kühldecke, ein Joch für eine solche sowie ein Deckenelement für eine Heiz- und Kühldecke.

### Stand der Technik

Es ist ein Deckenelement für eine Heiz- und Kühldecke bekannt mit einer Schienenanordnung, deren Schienen durch ein mäanderförmiges Kühlrohr verbunden sind. Die Kontaktflächen der Schienen sind mit der Oberseite der Deckenplatte verklebt. Diese an sich bestens bewährte Ausführung ist aufwendig in der Herstellung. Vor allem stellt das Verkleben der Schienen mit den Kontaktflächen einen verhältnismässig schwierigen Arbeitsschritt dar, der die Einhaltung bestimmter Randbedingungen sowie spezielle Vorrichtungen erfordert und daher nicht überall, insbesondere in der Regel nicht am Einsatzort ausgeführt werden kann.

Es ist auch ein Deckenelement bekannt (EP-A-0 406 476), bei welchem mehrere parallele Schienen an einem Joch, das sie kreuzen, mittels einer Schnappverbindung aufgehängt sind. Die Deckenplatte ist jedoch nicht direkt am Joch befestigt, sondern mittels Magneten an den Schienen. Bei einer derartigen Befestigung muss die Verbindung zwischen Schienen und Deckenplatte einerseits hoher mechanischer Belastung Stand halten, andererseits auch einen sehr guten Wärmeübergang gewährleisten, und zwar beides auf lange Dauer. Dies ist, ausser durch aufwendige Klebeverbindungen wie oben beschrieben nur schwer zu realisieren. Ausserdem sind die Schnappverbindungen nicht unbedingt geeignet, die Schienen bezüglich Höhe und Winkellage genau auszurichten, so dass sich die Deckenplatte wellig verformen kann.

Aus der EP-A-0 757 211 ist ein Deckenelement für eine Heiz-und Kühldecke bekannt, welches eine gattungsgemässe Schienenanordnung sowie ein Joch gemäss dem Oberbegriff des Anspruchs 3 umfasst. Dabei dienen offenbar die Schienen als tragende Elemente, auf welche das Joch aufgeschnappt ist. Die zwischen den Kreuzungsstellen mit den Schienen am Joch starr befestigten Koppelmagnete halten die Deckenplatte, so dass sie zwischen den Schienen nicht durchhängt. Die Deckenplatte ist aber offenbar in erster Linie an den Schienen befestigt, während die Koppelmagnete nur eine Hilfsfunktion ausüben. Die Schienen müssen also anderweitig so befestigt werden, dass ihre Unterseiten genau in einer Ebene liegen und die Verbindung zwischen ihnen und der Deckenplatte muss wiederum dauerhaft hoher mechanischer Belastung standhalten und zugleich einen guten Wärmeübergang gewährleisten, was nur mit beträchtlichem Aufwand zu bewerkstelligen ist.

### Darstellung der Erfindung

Der Erfindung liegt die Aufgabe zu Grunde, eine Schienenanordnung anzugeben, bei der die Lage der Schienen auf einfache Weise genau festgelegt wird und die Oberseite einer Deckenplatte an den Kontaktflächen der Schienen satt und zuverlässig anliegt, ohne dass an eine direkte Verbindung zwischen den Schienen und der Deckenplatte besondere Anforderungen gestellt werden müssten. Diese Aufgabe wird durch die Merkmale im Kennzeichen des Anspruchs 1 gelöst. Zusätzlich soll ein Joch für eine erfindungsgemässe Schienenanordnung angegeben werden, das sich für den Einsatz in einer solchen besonders gut eignet, insbesondere die Montage der Deckenplatte vereinfacht. Diese Aufgabe wird durch die Merkmale im Kennzeichn des Anspruchs 3 gelöst.

Schliesslich soll ein Deckenelement angegeben werden, bei welchem die Verbindung zwischen Deckenplatte und Schiene keinen grossen mechanischen Belastungen ausgesetzt ist. Diese Aufgaben werden durch die Merkmale des Anspruchs 8 gelöst.

Weitere Vorteile der Erfindung sind darin zu sehen, dass die Deckenplatte in einer ebenen Position fixiert ist, ohne dass die Schienen durch ihr Gewicht belastet würden. Ausserdem ist die Verbindung zwischen Joch oder Jochen, Schienen und Deckenplatte sehr einfach und auch direkt am Einsatzort herstellbar. Die Joche können sogar ohne besonderen Aufwand nachträglich montiert und eine gute wärmeleitende Verbindung hergestellt werden, wenn z. B. Klebungen unsachgemäss ausgeführt wurden und die Verbindungen sich gelöst haben.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1: eine Draufsicht auf ein erfindungsgemässes Deckenelement und
- Fig. 2: eine Frontansicht des Deckenelements von Fig. 1.

### Wege zur Ausführung der Erfindung

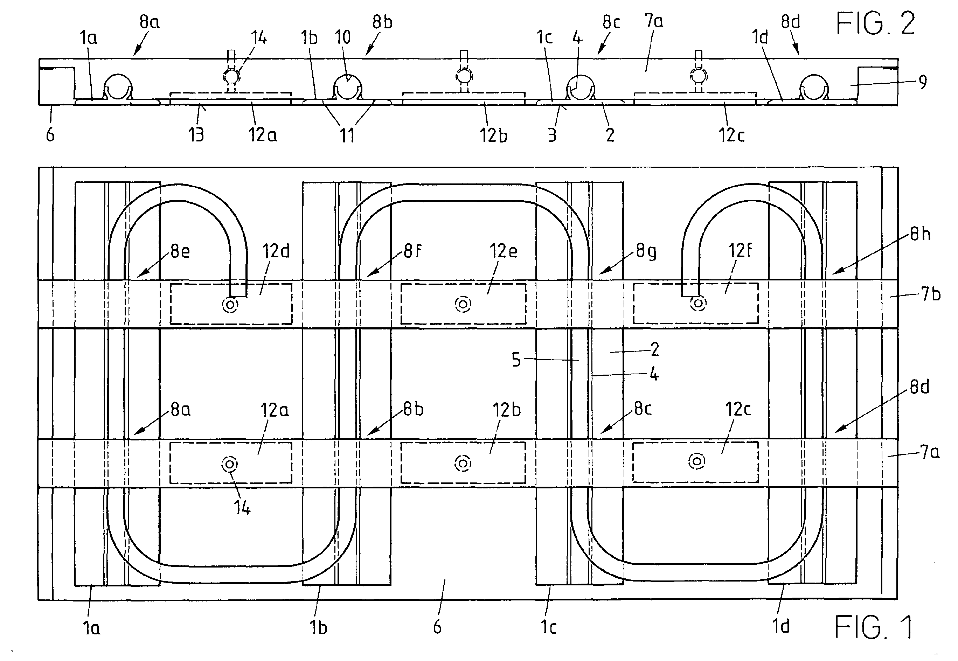

Das Deckenelement für eine Heiz- und Kühldecke weist eine Schienenanordnung aus mehreren parallelen geraden Schienen 1a-d auf, welche jeweils eine rechteckige Grundplatte 2 umfassen mit an der Unterseite einer ebenen Kontaktfläche 3 und an der Oberseite einer Führung 4, welche einen Rohrabschnitt 5 aufnimmt, der jeweils von einem geraden Abschnitt eines mäanderförmigen Rohrs gebildet wird (in Fig. 2 weggelassen), das zur Durchleitung eines Heiz- oder Kühlmediums dient. An der Unterseite ist das Deckenelement durch eine Deckenplatte 6 abgeschlossen, die als Lochplatte ausgebildet ist. Ihre Oberseite kann von einem Akustikvlies bedeckt sein.

Die Deckenplatte 6 ist an zwei rechtwinklig zu den Schienen 1a-d verlaufenden gleichen Jochen 7a,b aufgehängt, die z. B. an der Raumdecke befestigt sind. Jedes der Joche 7a,b ist als unten offenes U-Profil ausgebildet und weist vier Kreuzungsstellen 8a-d; 8e-h auf, an denen es von den Schienen 1a-d gekreuzt wird. An jeder der Kreuzungsstellen 8a-h sind die Schenkel 9 des Jochs von etwa bogenförmigen Ausnehmungen 10 durchbrochen, welche die Führungen 4 und die Rohrabschnitte 5 aufnehmen. Die Ausnehmungen 10 können Einsprünge aufweisen, die unter die Ränder der Führung 4 greifen, so dass die Schienen 1a-d an die Joche 7a,b geschnappt und von ihnen allein gehalten werden können.

Die Lage der Schienen 1a-d wird jedoch durch in einer gemeinsamen Ebene liegende Anschläge 11 definiert, die an jeder der Kreuzungsstellen 8a-h von jeweils vier an die Ausnehmung 10 anschliessenden Abschnitten der unteren Endflächen der Schenkel 9 gebildet werden und mit der Oberseite der Grundplatte 2 zusammenwirken, deren Lage sie bezüglich der Höhe nach oben beschränken und die sie so ausrichten, dass die Kontaktflächen 3 der Schienen 1a-d ebenfalls in einer Ebene liegen. Die Schienen 1a-d werden durch die Deckenplatte 6 gegen die Anschläge 11 gedrückt. Sie ist mittels Koppelmagneten 12a-f direkt an den Jochen 7a,b aufgehängt. Die rechteckigen Haftflächen 13 der Koppelmagnete 12a-f sind plan und liegen im wesentlichen in der durch die Kontaktflächen 3 definierten Ebene. Damit sich jeweils die Haftfläche 13 genau an die Winkellage jenes Abschnitts der Oberseite der Deckenplatte 6, an der sie-eventuell durch ein Akustikvlies getrennt - anliegt, anpassen kann, ist jeder der Koppelmagnete 12a-c; 12d-f jeweils über ein Kugelgelenk 14 am Joch 7a;b beschränkt kippbar aufgehängt.

Die Deckenplatte 6 wird also durch die Koppelmagnete 12a-f gehalten und zwar so, dass durch dieselben ihre Oberseite gegen die Kontaktflächen 3 gezogen wird. Zwischen der Deckenplatte 6 und den Kontaktflächen 3 kann ein pastenartiges Bindemittel angebracht sein, z. B. ein Klebstoff, der jedoch im Sinne einer Optimierung der Wärmeübertragung ausgewählt sein kann, da er höchstens geringer mechanischer Belastung ausgesetzt ist. Klebstoff kann auch in Form eines doppelseitig klebenden Klebebands aufgebracht sein. Die genaue Höhenlage der Haftflächen 13 der Koppelmagnete 12a-f wird man in Abhängigkeit von der Art der Verbindung zwischen den Schienen 1a-d und der Deckenplatte 6, insbesondere der Dicke einer allfälligen Zwischenlage vorzugsweise so einstellen, dass die Oberseite der Deckenplatte 6 von einer leichten elastischen Kraft gegen die Haftflächen 3 gezogen wird. Eventuell können dazu die Koppelmagnete auch federnd aufgehängt werden, was zugleich ebenfalls eine Anpassung ihrer Winkellage an diejenige des Abschnittes der Oberseite der Deckenplatte, an der sie anliegen, erlaubt.

Statt der beschriebenen starren Schienen können auch elastische Kontaktelemente zum Einsatz kommen, die auch grössere Toleranzen des Abstandes zwischen dem Heiz- oder Kühlmedium führenden Rohr einerseits und der Deckenplatte andererseits ausgleichen und für einen zuverlässig guten Wärmeübergang sorgen. Der Anschlag kann dann statt auf das Kontaktelement auch direkt auf die Deckenplatte wirken. Geeignete Kontaktelemente der angesprochenen Art sind der EP-A-0 764 818 zu entnehmen.

### Bezugszeichenliste

- 1a-d: Schienen
- 2: Grundplatte
- 3: Haftfläche
- 4: Führung
- 5: Rohrabschnitt
- 6: Deckenplatte
- 7a,b: Joche
- 8a-h: Kreuzungsstellen
- 9: Schenkel
- 10: Ausnehmungen
- 11: Anschlag
- 12a-f: Koppelmagnete
- 13: Haftfläche
- 14: Kugelgelenk

## Patentansprüche

1. Schienenanordnung für eine Heiz- und Kühldecke, mit mehreren parallelen Schienen (1a-d) mit jeweils einer Grundplatte (2) mit einer ebenen Kontaktfläche (3) zur Kontaktierung einer Deckenplatte (6) und einem an der der Kontaktfläche (3) gegenüberliegenden Seite der Grundplatte (2) angeordneten Führung (4) zur Aufnahme eines Rohrabschnitts (5) sowie mit mindestens einem Joch (7a, 7b), das an mehreren in Längsrichtung mit Abstand aufeinanderfolgenden Kreuzungsstellen (8a-d; 8e-h) von den Schienen (1a-d) gekreuzt wird und ausserhalb der Kreuzungsstellen (8a-d; 8e-h) liegende Koppelmagnete (12a-c; 12d-f) mit jeweils einer planen Haftfläche (13) zum Festhalten der Deckenplatte (6) aufweist, **dadurch gekennzeichnet, dass** das mindestens eine Joch (7a; 7b) an jeder der Kreuzungsstellen (8a-d; 8e-h) jeweils einen Anschlag (11) zur Festlegung der Lage der Grundplatte (2) aufweist, welcher mit der Oberseite der Grundplatte (2) der Schiene (1a-d) derart zusammenwirkt, dass die Kontaktflächen (3) der Schienen (1a-d) in einer gemeinsamen Ebene liegen, in welcher mindestens annähernd auch die Haftflächen (13) der Koppelmagnete (12a-c; d-f) liegen.

2. Schienenanordnung nach Anspruch 1, **dadurch gekennzeichnet, dass** es ein mäanderförmiges Rohr umfasst, welches in den Führungen (4) liegende Rohrabschnitte (5) bildet.

3. Joch (7a, 7b) für eine Schienenanordnung nach Anspruch 1 oder 2, mit mehreren in Längsrichtung mit Abstand aufeinanderfolgenden Kreuzungsstellen (8a-d; 8e-h) sowie ausserhalb derselben angebrachten Koppelmagneten (12a-c; 12d-f) mit jeweils einer planen Haftfläche (13) zum Festhalten der Deckenplatte (6), **dadurch gekennzeichnet, dass** an jeder der Kreuzungsstellen (8a-d; 8e-h) ein Anschlag (11) zur Festlegung der Lage der Grundplatte (2) einer der Schienen (1a-d) angeordnet ist, wobei die Anschläge in einer gemeinsamen Ebene liegen, und die Koppelmagnete (12a-c; 12d-f) jeweils beschränkt kippbar aufgehängt sind.

4. Joch nach Anspruch 3, **dadurch gekennzeichnet, dass** die Koppelmagnete (12a-c, 12d-f) jeweils über ein Kugelgelenk mit dem Joch (7a; 7b) verbunden sind.

5. Joch nach Anspruch 3, **dadurch gekennzeichnet, dass** die Koppelmagnete (12a-c, 12d-f) jeweils federnd am Joch (7a; 7b) aufgehängt sind.

6. Joch (7a, 7b) nach einem der Ansprüche 3 bis 5, **dadurch gekennzeichnet, dass** es ein U-Profil umfasst, an dem die Koppelmagnete (12a-c; 12e-f) aufgehängt sind und dass an jeder der Kreuzungsstellen (8a-d; 8e-h) Ausnehmungen (10) in den Schenkeln (9) des U-Profils zur Durchführung eines Rohrabschnitts (5) vorgesehen sind, während die den Ausnehmungen (10) benachbarten Endflächen der Schenkel (9) den Anschlag (11) bilden.

7. Joch (7a, 7b) nach einem der Ansprüche 3 bis 6, **dadurch gekennzeichnet, dass** zwischen zwei Kreuzungsstellen (8a-d; 8e-h) jeweils ein Koppelmagnet (12a-c; 12d-f) angeordnet ist.

8. Deckenelement für eine Heiz-und Kühldecke, mit einer Schienenanordnung nach Anspruch 1 oder 2 sowie mit einer Deckenplatte (6), deren Oberseite durch die Koppelmagnete (12a-f), deren Haftflächen (13) an ihr anliegen, gegen die Kontaktflächen (3) der Schienen (1a-d) gezogen ist.

9. Deckenelement nach Anspruch 8, **dadurch gekennzeichnet, dass** die Deckenplatte (6) als Lochplatte ausgebildet ist.

10. Deckenelement nach Anspruch 8 oder 9, **dadurch gekennzeichnet, dass** die Oberseite der Deckenplatte (6) mit den Kontaktflächen (3) der Schienen (1a-d) durch ein pastenartiges Bindemittel, vorzugsweise einen Klebstoff verbunden ist.
